# EUROPEAN PATENT APPLICATION

(11) **EP 2 668 847 A1**
(43) Date of publication of application: **04.12.2013**
(21) Application number: 13169873.0
(22) Date of filing: 30.05.2013
(51) Int. Cl.: A01N 1/02, G08B 25/10, B01L 99/00

(54) **Container for carrying biological samples**

(30) Priority: 31.05.2012 IT MI20120943
(71) Applicant: SOL S.p.A., 20900 Monza (IT)
(72) Inventor: Forni, Daniele, 20148 Milano (IT); Navoni, Roberto, 24054 Calcio BG (IT)
(74) Representative: Modiano, Micaela Nadia

(57) **Abstract**

A container (1) for carrying biological samples (100), comprising a location detection device (2) and an inertial sensor (3) for the position of the container (1), and a control unit (4) which comprises a communications device (5) which is adapted to transmit the data that arrive from the location detection device (2) and from the inertial position sensor (3) to a central unit (6), the control unit (4) comprising a device (7) for storing the data.

## Description

The present invention relates to a container for carrying biological samples.

The field of use of containers for carrying biological samples relates to the transport of biological material used for research, diagnosis and transplantation, very often constituted by non-repeatable samples that also have a considerable financial value. In this context, the carried material therefore has characteristics of uniqueness that are difficult to find in ordinary operations for carrying materials of other kinds, making it therefore necessary to work under extreme control and safety conditions.

The problems observed in the field relate to the entire carrying process in all of its components:
- the containers assigned to the use must have physical characteristics that ensure the integrity and safety of the sample even in case of accidents or attempted tampering;
- the preservation systems must ensure the integrity of the material, taking into account also possible delays in delivery;
- the monitoring systems must check the status of the carried material and of all the steps of transport.

Containers for carrying biological samples of a known type and currently commercially available are capable of providing only partial solutions to these problems, since they do not ensure complete protection of the sample or have a monitoring of the route parameters that is limited to the detection of the carrying temperatures by means of a data logger, a device that constrains the acquisition of the data to the use of specific software and that constrains the respective storage to a specific PC, all of which can be assessed only once transport has ended, without the possibility of real-time management of alarm situations.

The aim of the present invention is to provide a container for carrying biological samples that overcomes the limitations of the background art, increasing the safety of all the operations tied to the transport process.

Within this aim, an object of the present invention is to provide a container for carrying biological samples that allows constant detection of the location of the container, the status of the content, any critical situations and report them in real time to a control center. Real-time gathering of transport process parameters makes it possible to have available a complete data bank that is capable of giving significant information regarding:
- the status of the container (validation of the solution and scheduling of appropriate modifications);
- the status of the biological sample in relation to the environmental conditions to which it is subjected (accelerations, impacts, pressures) and qualitative validation of the carrying process;
- adequacy of the scheduled routes for the transfer and optimization of the transport parameters.

In other words, the aim of the invention is to provide a container for carrying biological samples that allows complete and highly reliable supervision of the transport process in terms of:
- traceability and validation of the route;
- assurance that during the trip the sample is preserved according to preset criteria thanks to the monitoring of all the fundamental parameters (capability to record the internal conditions of the transport container);
- management of all the alarms required for supervising the safety of said sample (any opening of the container, temperature thresholds, excessive impacts or accelerations, deviations from the set route, abnormal transfer times);
- unification of all the data in a single centralized collection device and development of services aimed at rendering these data accessible in a differentiated manner according to the requirements (web interface, local monitoring).

This aim, these objects and others that will become more apparent hereinafter are achieved by a container for carrying biological samples, **characterized in that** it comprises a location detection device and an inertial sensor for the position of said container, and a control unit which comprises a communications device which is adapted to transmit the data that arrive from said location detection device and from said inertial position sensor to a central unit, said control unit comprising a device for storing said data.

Further characteristics and advantages will become more apparent from the description of a preferred but not exclusive embodiment of a container for carrying biological samples, illustrated by way of non-limiting example with the aid of the accompanying drawings, wherein:

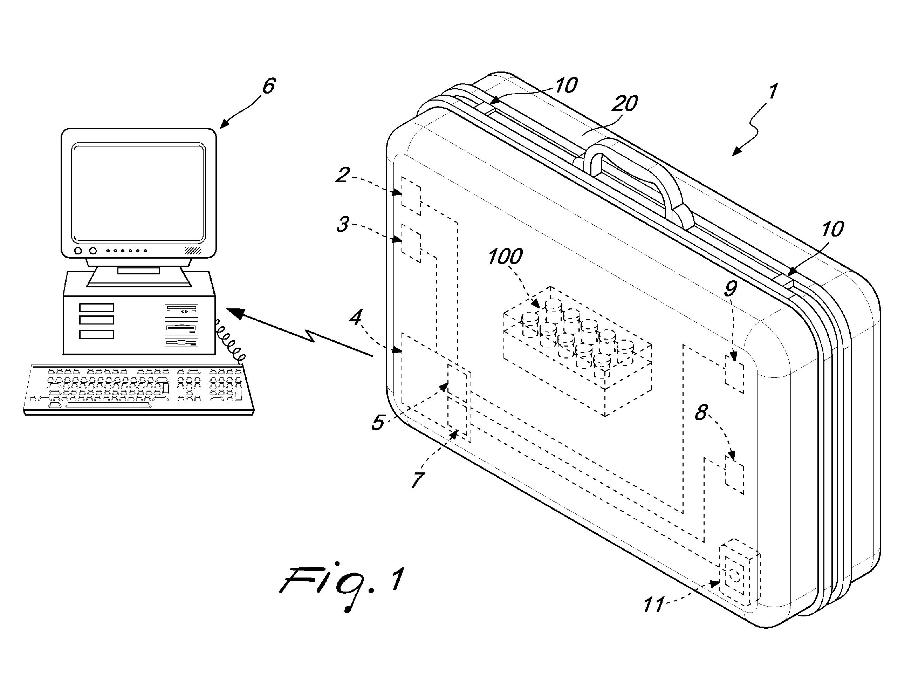

Figure 1 is a schematic perspective view of a container for carrying biological samples, according to the invention.

With reference to the figures, the container for carrying biological samples is generally designated by the reference numeral 1.

According to the invention, the container 1 comprises a location detection device 2 and an inertial sensor 3 for the position of said container 1, and a control unit 4 that comprises a communications device 5 adapted to transmit the data that arrive from the location detection device 2 and from the inertial position sensor 3 to a central unit 6. The control unit 4 comprises a device 7 for storing the data.

The location detection device 2 can be of the GPS type (acronym of Global Positioning System) and is adapted to provide the geographical and time-related location of the container 1 in outdoor locations. The location detection device 2 is advantageously adapted to detect the location even indoors.

The location detection device 2 can also be of the GSM type (acronym of Global System for Mobile Communications) or of the following types: (GPRS - General Packet Radio Service, UMTS - Universal Mobile Telecommunications System), i.e., it can use the triangulation of the cells of the mobile network to determine the geographical and time-dependent location of the container 1, for example if no satellites are available for localization via GPS.

The inertial position sensor 3 is advantageously of the type of accelerometers and/or gyroscopes, which can be provided by means of the MEMS technology (acronym of Micro Electro-Mechanical Systems). Said sensor 3 can be integrated in the container 1 and provides data related to the occurrence of important impacts, to the travel position of the container 1, and to the accelerations to which the container 1 is subjected. Advantageously, the data that arrive from the inertial position sensor 3 can be integrated with the location data that can be detected by the location detection device 2. The inertial sensor systems in fact allow, starting from a known point (for example the last valid location detected by the GPS location detection device 2), calculation of the distances traveled in space and therefore of the location of the container 1. This method can be applied advantageously in all situations in which it is not possible to determine the location with the aid of the location detection device 2 (GPS or GSM network).

The control unit 4, which comprises the communication device 5 and the storage device 7, comprises a low-power compact motherboard. The communications device 5 is advantageously integrated in said motherboard and comprises a GSM/GPRS/UMTS modem for the exchange of data with the central unit 6. Advantageously, the SIM card (acronym of Subscriber Identity Module) can be placed on the motherboard in a position that can be accessed easily to allow easy replacement, while the antenna is external to the motherboard in order to facilitate signal reception. This system makes it possible to use the GPRS communication channel, which is highly efficient and inexpensive. The alternative SMS channel (acronym of Short Message Service) in any case remains available and is valid in case of requests when the above cited modem is off or not reachable.

The storage device 7 is adapted to store the data relating to the route followed by the container 1 and the data relating to the conditions of the container 1 during the route. These data are advantageously stored in a nonvolatile memory of the microSD type (abbreviation of the expression Micro Secure Digital), which can have a variable capacity and can be removed and led by a PC after decoding of the contents.

The container 1 can be constituted advantageously by a briefcase 20, made of a material constituted by a propylene mix such as the patented material TTX01 ®, adapted to give said container 1 a high resistance to impacts, drops and pressures, as well as to extreme temperatures, for example in the range from -40°C to -80°C. The container 1 is advantageously hermetic, resistant to dust, humidity, acids, sand. In order to allow thermal insulation of the biological samples 100, kept at their temperature by means of adapted cooling means, the container 1 is advantageously integrated with metalized polyester bags that are padded with polyurethane coagulated with material of the non-woven fabric type.

The container 1 for carrying biological samples 100 can comprise a temperature sensor 8 and/or a pressure sensor 9. The control unit 4 can thus also be suitable to transmit to the central unit 6 and to store, for example on the storage device 7, the data that originates from said temperature sensor 8 and said pressure sensor 9.

The temperature sensor 8 can be positioned in the container 1 and connected to the control unit 4 by means of an adapted cable, or can be integrated directly in the container 1. The temperature sensor 8 is adapted to read temperatures down to -80°C, using heat probes of the PTC type (acronym of Positive Temperature Coefficient), which are extremely precise and mechanically strong.

The pressure sensor 9 is advantageously adapted to check the internal pressure of the container 1, so as to ensure maximum safety even when working with dry ice, which sublimates, and in changing to the gaseous state can create potentially explosive situations. The container 1 is provided with a venting valve for the excess carbon dioxide, while the pressure sensor 9 reads the pressure generated by said gas.

The container 1 for carrying of biological samples 100 may furthermore comprise at least one sensor 10 for detecting the opening of the container 1, for example of the magnetic type, which cannot be influenced by impacts. The control unit 4 is adapted to transmit the data that arrive from the opening sensor 10 to the central unit 6 and to store them.

The container 1 can comprise advantageously at least one battery set 11 for the supply of power to at least the location detection device 2, the inertial position sensor 3 and the control unit 4, and conveniently to the various temperature, pressure and opening sensors 8, 9, 10. The power supply batteries are advantageously of the nickel-metal hydride type, which are strong, safe and durable. Recharging is performed advantageously by means of an internal battery charger that ensures insulation from the electric grid and avoids overheating inside the container 1. The battery set 11 is advantageously insulated electrically and thermally inside the container 1.

The data that arrive from the location detection device 2 and from the inertial position sensor 3 and from the additional temperature sensor 8, pressure sensor 9 and opening sensor 10, transmitted to the central unit 6, can be used by means of a dedicated web portal.

Although the operation of the container for carrying biological samples is clear and evident from what has been described, some aspects of operation will be described in more detail hereinafter.

The operation of the container 1 provides for an interactive geo-locatable support, provided with dedicated accelerometers and with software for the detection and management of the transmission conditions and container location detection conditions. The container 1 communicates with the dedicated operating central unit 6, which is capable of managing the steps of the delivery and collection of the biological sample 100, of interpreting the data sent by the container 1 during the transport, of reporting in real time the alarms (exceeding of preset temperature thresholds and tampering with the container).

The users can access these data by means of the dedicated web portal, accessing by means of any Internet connection (remote interaction). As an alternative, local interaction is possible by monitoring of the status of the container 1 on site by the personnel that performs the transport or if communication with the central unit 6 is temporarily impossible.

Communication of the gathered data to the central operating unit 6 is ensured by the presence of the communication device 5, which is activated, allowing the transmission of the data, if necessary of the alarm states relating to the position sensor 3, to the temperature sensor 8, to the pressure sensor 9 or to the opening sensor 10. The data can also be sent at preset time intervals.

In case of transport by air, the activation of the communication device 5 to communicate the data is inhibited manually by the operator or automatically by the control unit 4, in case of:
- high altitude
- high acceleration
- high speed
- geographical location related to an airport.

The storage device 7 can in fact contain the geographical coordinates of all the airports, updated cyclically, so that the comparison between the current position of the container 1 and the location of the airports allows checking their proximity and therefore provide for the shutdown of said communications device 5 until standard carrying conditions are restored.

The safety of the carried biological samples 100 is checked by logging the conditions inside the container 1 in terms of temperature and pressure. Logging of these parameters occurs at preset times, whereas checking is continuous and therefore makes it possible to send alarms in case of anomalies.

The alarms are managed in real time and are provided in case of:
- authorized and unauthorized opening of the container (by means of the opening sensor 10);
- exceeded preset temperature thresholds (by means of the temperature sensor 8);
- excessive impacts (by means of the inertial position sensor 3);
- deviations from the set route (by means of the location detection device 2 and optionally the inertial position sensor 3);
- abnormal transfer times (by means of the location detection device 2 and optionally the inertial position sensor 3).

The alarms are handled by the central operating unit 6, which, in addition to making them available on a dedicated portal which is accessible to users, is capable of generating in an automated manner, if needed, additional alert communications (for example SMS or emails).

The data gathered by the container 1, in terms of positions, alarms and carrying conditions, can be used over the Web by means of a dedicated portal with access reserved to registered users authorized by means of a user name and a password.

The system administrator is capable of managing all the containers 1 and can define the association between the user and the respective containers 1 as well as the corresponding access passwords.

In this manner it is possible to control access to the information and limit the queries of each user exclusively to the associated containers in use.

Once the portal has been accessed, it is possible to view from the main page the list of the various containers associated with one's user and in particular for each one of them it is possible to access status data (open/closed, temperature, pressure, etc.) and mapping locations.

As regards the status data of each individual container, it is possible to view the history of the detected locations at regular intervals, with the date, the time and the corresponding status indications, as well as the charging status. It is also possible to monitor the occurrence of the various provided alarms (temperature, opening violation), with the detail of all the process parameters at the exact time when said alarm was reported.

In the mapping section is possible to view the location of the container, choosing whether to check its current location or the history of its locations, performing a tracking of the route followed.

The administrator can furthermore view the location and status of all the containers.

In practice it has been found that the container for carrying biological samples according to the present invention achieves the intended aim and objects, since it makes it possible to carry biological samples in a manner that is safe, traceable and smart.

Another advantage of the container for carrying biological samples according to the invention is that it centralizes all the information relating to the transport of a biological sample in a single gathering point, allowing standardization of this information and making it accessible in various ways.

A further advantage of the container for carrying biological samples according to the invention resides in the fact that said centralization of the information and its standardization allow the development of tools suitable for the management of the various services and the performing of activities for analysis and rationalization of processes (computerization and optimization of processes).

Another advantage of the container for carrying biological samples according to the invention is that it ensures high energy endurance and a high assurance of perfect operation during the expected time.

A further advantage of the container for carrying biological samples according to the invention relates to the redundancy of the information, which allows having a picture of the transport conditions that is always complete and accessible.

The container for carrying biological samples thus conceived is susceptible of numerous modifications and variations, all of which are within the scope of the appended claims.

All the details may further be replaced with other technically equivalent elements.

In practice, the materials used, as long as they are compatible with the specific use, as well as the contingent shapes and dimensions, may be any according to the requirements.

The disclosures in Italian Patent Application No. MI2012A000943 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A container (1) for carrying biological samples (100), **characterized in that** it comprises a location detection device (2) and an inertial sensor (3) for the position of said container (1), and a control unit (4) which comprises a communications device (5) which is adapted to transmit the data that arrive from said location detection device (2) and from said inertial position sensor (3) to a central unit (6), said control unit (4) comprising a device (7) for storing said data.

2. The container (1) for carrying biological samples according to claim 1, **characterized in that** it comprises a temperature sensor (8), said control unit (4) being adapted to transmit to said central unit (6) and to store the data that arrive from said temperature sensor (8).

3. The container (1) for carrying biological samples according to claim 1, **characterized in that** it comprises a pressure sensor (9), said control unit (4) being adapted to transmit to said central unit (6) and to store the data that arrive from said pressure sensor (9).

4. The container (1) for carrying biological samples according to one or more of the preceding claims, **characterized in that** it comprises at least one sensor (10) for detecting the opening of said container (1), said control unit (4) being adapted to transmit to said central unit (6) and to store the data that arrive from said opening sensor (10).

5. The container (1) for carrying biological samples according to one or more of the preceding claims, **characterized in that** it comprises at least one battery set (11) for supplying power to at least said location detection device (2), said inertial position sensor (3) and said control unit (4).

6. The container (1) for carrying biological samples according to claim 5, **characterized in that** said battery set (11) is electrically and thermally insulated inside said container (1).

7. The container (1) for carrying biological samples according to one or more of the preceding claims, **characterized in that** said data that arrive at least from said location detection device (2) and from said inertial position sensor (3) and are transmitted to said central unit (6) can be used by means of a dedicated web portal.
